# EUROPEAN PATENT SPECIFICATION

(11) **EP 3 951 125 B1**
(45) Date of publication and mention of the grant of the patent: **24.12.2025**
(21) Application number: 20189756.8
(22) Date of filing: 06.08.2020
(51) Int. Cl.: E06B 9/13, B23Q 11/08, E05B 65/00, E06B 9/86, E06B 9/80

(54) **ROLL DOOR**
ROLLTOR
PORTE ROULANTE

(43) Date of publication of application: 09.02.2022
(73) Proprietor: Nordic Door AB, 300 04 Halmstad (SE)
(72) Inventor: Håkansson, Ulf, 305 94 Halmstad (SE)
(74) Representative: Bergenstråhle & Partners AB

(56) References cited:
- DE-A1- 102004 040 801
- DE-A1- 102012 109 445
- US-A1- 2013 112 358
- US-A1- 2017 328 130
- DYNATECT: "Gortite VF Automated Machine Safety Door", 19 July 2018 (2018-07-19), XP055767944, Retrieved from the Internet <URL:https://dynatect.com/product/doors/vf-automated-machine-safety-roll-up-door/> [retrieved on 20210122]

## Description

### Technical field

The invention concerns a system comprising a control system and a roll door of the type comprising a flexible door leaf, which is to be rolled up on a roll operator. The inventive system has improved safety and is suitable with so-called high-speed roll door for machine protection and other applications where a roll door with high security is needed.

### Background art

Roll doors and especially high-speed roll doors with a flexible door leaf is a type of door that has been widely used around the world for some decades. Originally, roll doors were mainly used as climate separation in gate openings, for example in warehouses, cold rooms, etc., where people or trucks pass with high frequency. The great advantage of using high-speed roll doors in these applications is that the doors can be opened and closed at high speed and that due to their construction, they withstand wear and tear and are easy to repair for example after a collision.

For several years, these high-speed roll doors also have been used as machine protection in front of, for example, robotized welding cells or processing cells in the automotive industry. The purpose of the roll doors in these applications are to protect the operator, who is outside the cell, while the robot or the machine is working inside the cell. When the robot or machine has completed its operation, the door may be opened, and the workpiece can be replaced with a new one, for example.

To make sure that the operator cannot enter the cell while the robot is working or while the machine is still running, the roll doors are provided with so-called high-class safety switches, i.e. electrical sensors which detects if the roll door is closed and which prevent the robot/machine from starting if the roll door is not securely closed. The safety switches may be positioned outside or inside the door frames and normally are connected to a safety system which disables the operation of the machines in the enclosure if the door is open. One such system is known from US 2017/328130 A1, where a flexible roll door leaf has a roll operator and frame profiles in which an electro-mechanical lock is arranged for cooperation with a locking pin. The system does not take care of any motion inside the cell, after the machine has stopped, but eventually only prevents entry into the cell if a stop signal from the machine is achieved and eventually makes sure that the machine is not possible to start if the locking pin is not properly secured in an end position in which the roll door is properly closed. A similar system is presented in US 2013/112358 A1, which comprises a flexible roll door leaf with a roll operator and frame profiles in which an electro-mechanical lock is arranged for cooperation with a locking pin. This system has an extra safety by which the roll door is prevented from being opened under a period of time after a machine connected to the system has stopped, upon a status signal from the machine to the system. The system does not handle any motion detection of machine parts or parts held by the machine, wherein one drawback is that if the time period described above is too short, the roll door might be opened while motions still occur, which is dangerous. There are also commercial system similar with this, concerning communication and generating of signals for such systems, for example as presented in Dynatect: "Gorite VF Automated Machine Safety Door", retrieved from the Internet: URL:https://dynatect.com/product/doors/vf-automated-machine-safety-roll-up-door/.

It is also important to ensure that an operator cannot stick the hand into the cell for example by pushing the flexible door blade inwards or pull it outwards close to the vertical side frame, along which the door leaf is moving during opening and closing. The door leaf and the side frames may therefore be designed to prevent the flexible door leaf from being pushed away from the frame, which would otherwise allow unauthorized access into the enclosure. To prevent this possibility, the applicant has developed and patented a special edge of the flexible door leaf, which locks the door leaf in the frame (patent SE 529 772 C2).

As mentioned above, many high-speed roll doors are used as machine protection, but there are a large number of applications where additional security is required. This applies to robots or machines which have a lag due to the kinetic energy in the tool or workpiece, after the machine has been stopped. This applies for example, to saw blades, lathes, etc. In these applications, it has so far not been possible to use high-speed roll doors because there is a risk that the operator, after the robot has received a stop signal, gives a signal to the door to open or that the operator tries to open the roll door before the movement of the robot, the machine or work piece has stopped.

### Summary of invention

It is an object of the invention to address at least some of the problems and issues outlined above. It is possible to achieve these objects and others by a system as defined in the attached independent claim 1.

According to an aspect of the invention, a system comprising a control system and a roll door with high security is provided. The roll door comprises a roll operator, two frame profiles which are to be arranged on opposite sides of an opening, for example in a fence or a wall, preferably for so-called machine protection. Each frame profile comprises guide grooves along their mutually facing sides, and the roll operator is arranged to be attached to a respective end of each frame profile, wherein the roll operator extends between the ends of the frame profiles. The roll operator may be attached for example with brackets or the like at respective ends of the roll operator, which brackets are adopted to fit a side or a top of the respective frame profile. The roll door further comprises a flexible door leaf, which comprises a first end, an opposite second end and two long sides, wherein the first end of the flexible door leaf is secured to the roll operator, and the roll operator is arranged to roll up the flexible door leaf on the roll operator. Further, a beam is secured to the second end of the flexible door leaf, wherein outer ends of the beam and the long sides of the flexible door leaf is accommodated in the guiding grooves of the frame profiles, and the door leaf as well as the beam is movable along the frame profiles in their longitudinal direction. The roll door further comprises a locking pin and an electro-mechanical lock, the latter arranged to receive the locking pin and further arranged to lock the locking pin in an end position. One of the locking pin and the electro-mechanical lock is fixedly arranged to the frame profile and the other is fixedly arranged to the outer end of the beam. Preferably, the electro-mechanical lock is fixedly arranged to the frame profile, preferably at the bottom of the same, and the locking pin is arranged at the outer end of the beam. Of course, the opposite is also possible. Further, the electro-mechanical lock is arranged to send a status signal to a control system with information that the roll door is closed, wherein a machine connected to the control system may be started. The electro-mechanical lock is further arranged to receive a status signal from a control system with information if a machine connected to the control system is started, wherein, if the machine is started, the electro-mechanical lock is arranged to lock the locking pin in the end position. The electro-mechanical lock is further arranged to unlock the locking pin from its locked position in the electro-mechanical lock upon a status signal from the control system with information that no motions are detected around a machine connected to the control system and/or that the electro-mechanical lock is arranged to, after a predetermined period of time, unlock the locking pin from its locked position in the electro-mechanical lock upon a status signal from a control system with information that a machine connected to the control system is stopped.

Such a solution, with for example one or several motion sensors arranged around a machine or in a robot cell, for detecting any motion inside the cell, and where the electro-mechanical lock is arranged to not unlock the locking pin until all motions has ceased inside the cell, provides an improved security which is not at hand in known solutions. As mentioned in the background, there has been risks and even accidents where known roll doors (and especially high-speed roll doors) only have had electronic supervision, only informing the system that the machine is stopped, while work pieces or machine parts still moving after a stopped machine. Known roll doors have been possible to open only upon a signal of that the machine/robot is stopped, which is very dangerous. The invention takes care of this risk by making it impossible to open the roll door until all motions have stopped inside the robot cell or the like. The alternative solution using a predetermined period of time, may be a stand-alone solution, only connected to the stop signal but may also be combined with motion sensor technology to further delay the possibility to open of the roll door.

This solution discloses a totally safe solution with a double protection, which discloses both an electronic protection, which makes it impossible to start the machine or robot until the roll door is properly closed, and a mechanical locking of the roll door in the closed position, which makes to roll door impossible to open when the machine is running. Prior art solutions do not provide this double security.

The invention further discloses that each frame profile is arranged such as both the locking pin and the electro-mechanical lock are enclosed inside the frame profile to prevent a user from contact with the locking pin and the electro-mechanical lock. For example, the frame profile is designed with a cross section where walls of the frame profile are arranged such as the locking pin and the electro-mechanical lock are protected between the walls. By such an arrangement yet another lever of security is added to the invention wherein it is impossible to reach/come into contact with moving parts during their longitudinal motion along the frame profiles, such as the ends of the moving beam and the locking pin, and further no risk that a user may injure a hand or fingers between the lock and the moving parts.

According to an embodiment, the beam comprises a bracket mounted at the outer end of the beam, wherein the locking pin is arranged on the bracket and protrudes from the bracket in the longitudinal direction of the frame, and the electro-mechanical lock is fixedly arranged to the frame profile. By the bracket arranged at the outer end of the beam, the bracket and the locking pin, which are moving along the frame when the roll door is opened or closed, are protected inside the frame and impossible to reach. The bracket is designed such as the locking pin may be attached on the bracket in a protected and secure manner, preferably with an L-shape with one shank protruding upwards and the other protruding forwards (towards the outside/front side of the roll door referring to the opening and the protective fence or the like around for example a robot).

According to an embodiment, the electro-mechanical lock comprises a receiving opening which is directed towards the locking pin, and which receiving opening is arranged to receive the locking pin and accommodate the locking pin in the end position. The receiving opening is preferably arranged in the longitudinal direction of the frame and the locking pin is thus preferably arranged in the same longitudinal direction and facing the receiving opening of the electro-mechanical lock.

According to an embodiment, the locking pin is flexibly arranged, either on the frame profile, if arranged on the frame profile, or on the outer end of the beam, if arranged on the outer end of the beam. It is preferred that the locking pin is flexibly arranged on the outer end of the beam and more preferred flexibly arranged on the bracket. By that the locking pin being flexibly attached (or being flexible itself), it is ensured that the locking pin enters the electro-mechanical lock in a good way, even if the roll door is closed very fast, like for high-speed roll door applications. The flexibility thereby ensures a good function of the locking function of the roll door.

According to an embodiment, the frame profile comprises a base part and a cover part, wherein the cover part is connectable to the base part and in the connected state arranged to cover the locking pin and the electro-mechanical lock. In the connected state, the frame profile covers the locking pin as well as the electro-mechanical lock, but also other moving parts, which all are protected inside the frame profile. Thus, a user is protected from contact with the locking pin, the electro-mechanical lock and moving parts while the beam and the flexible door leaf moves along the guiding grooves of the frame profiles.

According to an embodiment, at least the cover part comprises a window in position of the electro-mechanical lock such as the locking pin and the electro-mechanical lock is visible in the window in the end position. This provides a possibility to a visible check of the status of the lock arrangement, i.e. that the locking pin is secured into the end position of the electro-mechanical lock. By that, an extra, visual safety is achieved.

According to an embodiment, each outer end of the beam comprises at least one locking pin and each frame profile comprises at least one electro-mechanical lock, wherein a locking function is achieved at both sides of the roll door.

Further possible features and benefits of this solution will become apparent from the detailed description below.

### Brief description of drawings

The invention is now described, by way of example, with reference to the accompanying drawings, in which:
Fig. 1a-b shows isometric views of a roll door according to the invention, which roll door is arranged in an opening in a fence arranged as protection for example around a machine or robot cell. In Fig 1a, the interior of upper parts of the roll door is visible and in Fig. 1b, the interior of the upper part is protected by covers.
Fig. 2 shows a side view of the roll door of Fig. 1a-b used as in connection to a robot cell, for securing unauthorized entry into the cell, and for permission to enter into the cell when it is safe.
Fig. 3a shows an isometric view of a part of the roll door attached to a frame profile of the roll door, and an inventive lock arrangement which is arranged into the frame profile of the roll door, wherein the lock arrangement is in a first unlocked state.
Fig. 3b shows a zoomed view of the lock arrangement of Fig. 3a.
Fig 3c shows the lock arrangement in a second, locked state.
Fig. 4 shows the part of the roll door and frame part of Fig. 3c, wherein the frame profile is "closed" by a cover part, which safely covers the moveable parts, i.e. the lock arrangement and attachment parts between a door panel and the frame profile, inside the frame profile. A window in the cover part provides a possibility to a visible check of the status of the lock arrangement.
Fig. 5 is a section view of the frame profile with the lock arrangement inside the frame profile and an outer end of the roll door attached to the frame profile.

### Description of embodiments

In the following, a detailed description of a roll door according to the invention is disclosed in detail in respect of embodiments and in reference to the accompanying drawings. All examples herein should be seen as part of general description and therefore possible to combine in any way in general terms.

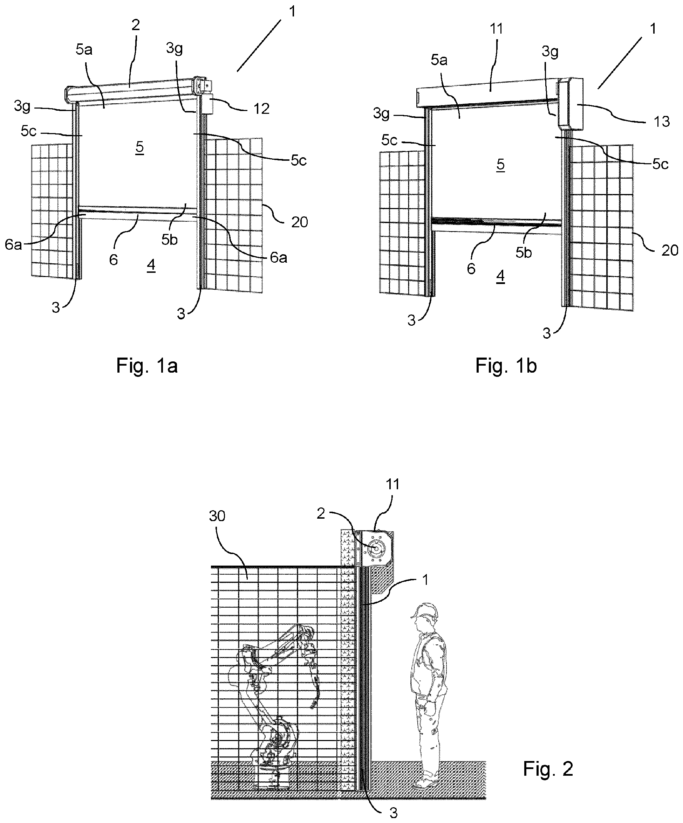

Fig. 1a show an isometric view of a roll door 1 according to the invention. The roll door 1 is arranged in an opening 4 in a fence 20 which for example may be arranged as protection around a machine or robot cell. Other applications are of course applicable to the inventive roll door 1. The roll door comprises a roll operator 2 which is arranged between upper ends 3g of two frame profiles 3, which are arranged on opposite sides of the opening 4. The two frame profiles 3 and the roll operator 2 thereby surrounds the opening 4. The roll door 1 further comprises a flexible door leaf 5 which comprises a first end 5a (upper end), an opposite second end 5b (lower end) and two long sides 5c opposite each other, wherein the first end 5a of the flexible door leaf 5 is secured to the roll operator 2 and the roll operator 2 is arranged to roll up the flexible door leaf 5 on the roll operator 2, by means of a motor 12. A beam 6 is secured to the second end 5b of the flexible door leaf 5 and outer ends 6a of the beam 6 as well as the long sides 5c of the flexible door leaf 5 are accommodated in guiding grooves 3a of the frame profiles 3 (see further below). The door leaf 5 as well as the beam 6 are movable along the frame profiles 3 in their longitudinal direction, i.e. normally vertically upwards and downwards when the motor 12 winds up the flexible door leaf 5 on the roll operator 2.

Fig 1b show an isometric view of a roll door 1 of Fig 1a, but with a roll cover 11 arranged to enclose the roll operator 2, to protect users from the moving parts of the roll operator. Further, a motor cover 13 is arranged over the motor 12, to protect users as well as the motor 12.

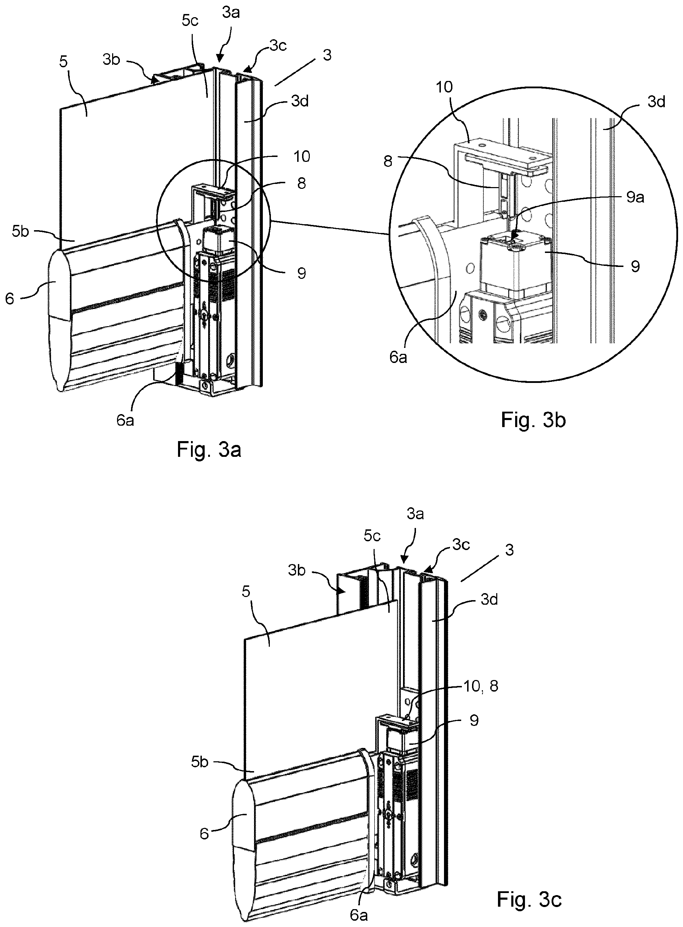

Fig. 2 shows a side view of the roll door 1 of Fig. 1a-b when used as so-called machine protection in connection to a robot cell 30. The purpose is to secure the area and prevent unauthorized entry into the robot cell 30. Further, the roll door 1 enables entry into the robot cell 30 when it is safe, that is when no machine parts, robot parts or any work piece is still moving inside the cell. For example, a signal from one or more motion sensors arranged in the robot cell 30 may be sent to a control system to which the roll door 1 is connected, wherein the roll door 1 may be opened if no motions is detected in the robot cell 30. Another possible way to solve this is with a time delay, wherein a signal to the control signal is sent when the machine/robot is shut off, and then, after a predefined time, the roll door 1 may be opened. Further, to be able to start the machine/robot, a start signal may be sent from the roll door 1 when it is safely secured in the closed position. This will be further explained below in relation to Figs. 3a-c.

Fig. 3a shows an isometric view of a part of the roll door 1 when attached to one of the two frame profiles 3 of the roll door 1 and further an inventive lock arrangement, which main parts are a key/locking pin 8 and a corresponding electro-mechanical lock 9, and which lock arrangement is in a first unlocked state. Fig. 3b is a zoomed view of the lock arrangement of Fig. 3a.

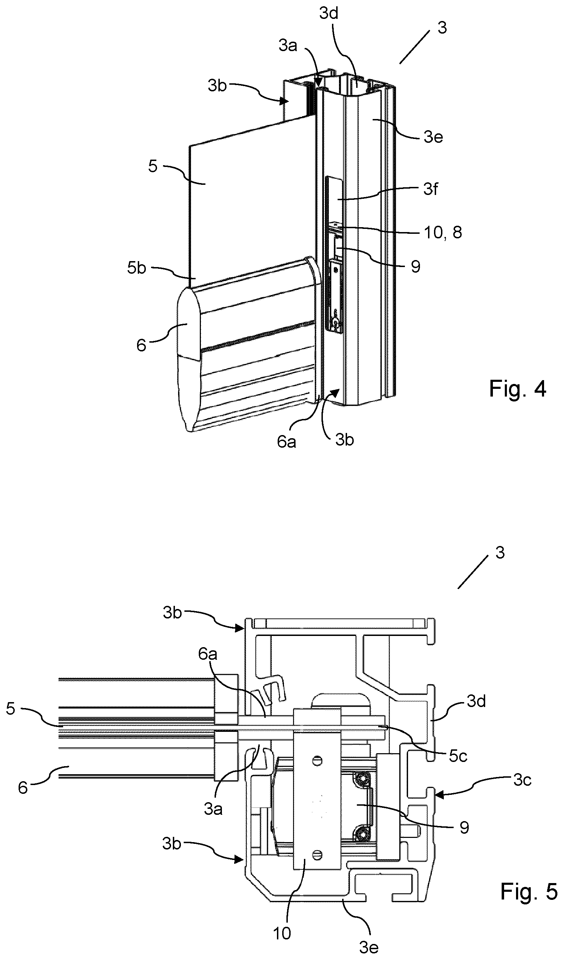

The frame profile 3 comprises a base part 3d and a cover part 3e (removed in Fig. 3a-c, see further Fig. 4-5), wherein the base part 3d is arranged to be attached to a substrate, for example a wall, a pillar, or the like and the cover part 3e is arranged to be attached to the base part 3d, to form a closed frame profile 3. The frame profile 3 in its mounted state, with the cover part 3e mounted to the base part 3d (see Figs. 4-5), comprises a first side 3b, which faces the opposite frame profile 3, that is the side facing the opening 4 and the door leaf 5. Further, the frame profile 3 comprises a second side 3c, which is opposite the first side 3b and thereby facing away from the opening 4 and the door leaf 5. The base part 3d comprises the second side 3c of the frame profile 3 which second side 3c is more or less a closed side. A number of wall portions protrudes from the second side 3c in direction towards the first side 3b, and at least one of the wall portions is connected to a part of the first side 3b of the frame profile 3 such as the base part 3d comprises at least a part of the first side 3b of the frame profile 3.

As mentioned above, the beam 6 is secured to the second end 5b of the flexible door leaf 5 and the outer end 6a of the beam 6 as well as the long side 5c of the flexible door leaf 5 are accommodated in a guiding groove 3a of the frame profile 3. A bottom of the guiding groove 3a is accommodated in the base part 3d of the frame profile 3 and the guiding groove 3a may comprise some kind of securing means, to secure that the long side 5c of the door leaf 5 is secured in the groove 3a. The applicant has a patent of that solution (SE 529772 C2) which, as said, may be used to secure the long side 5c in the guiding groove 3a in this application. The door leaf 5 as well as the beam 6 are movable along the frame profiles 3 in their longitudinal direction and are kept and guided by the frame profile 3 and its guiding groove 3a. An outer part of the guiding groove 3a is accommodated in the first side 3b of the frame profile 3, that is between first side parts 3b of the base part 3d and of the cover par 3e (see Figs. 4-5).

The outer end 6a of the beam 6 comprises an L-shaped bracket 10, which is fixedly attached to the beam 6 and which bracket 10 protrudes upwards with one vertical shank and towards the front side with one horizontal shank. The locking pin 8 is flexibly attached on the horizontal shank of the bracket 10 and protrudes from the bracket 10 in the longitudinal direction of the frame 3, i.e. pointing downwards along the longitudinal direction of the vertically arranged base part 3d of the frame profile 3. Since the roll door 1 preferably is used as a so-called high-speed roll door as discussed in the background, the flexibility of the locking pin 8 ensures that the pin 8 enters the electro-mechanical lock 9 in a good way, even if the roll door 1 is closed very fast. The flexibility thereby ensures a good function of the locking function of the roll door 1. The electro-mechanical lock 9 is fixedly arranged to the frame profile 3, preferably to the base part 3d of the frame profile 3, at the lower end of the same. The base part 3d of the frame profile 3 at least partly encloses the electro-mechanical lock 9, the outer end 6a of the beam 6 and the long side 5c of the flexible door leaf 5, by means of the protruding walls and second side 3c. In the preferred embodiment of the invention, each outer end 6a of the beam 6 comprises one bracket 10 with a locking pin 8, and each frame profile 3 comprises an electro-mechanical lock 9, wherein a locking function is achieved at both sides of the roll door 1.

The electro-mechanical lock 9 is arranged to receive the locking pin 8 and thereby comprises a receiving opening 9a, which is directed towards the locking pin 8, and which receiving opening 9a is arranged to receive the locking pin 8. The electro-mechanical lock 9 is further arranged to accommodate the locking pin 8 in an end position and to electro-mechanically lock the locking pin 8 into this position, which may be seen in Fig. 3c, which shows the lock arrangement in a second locked state. When the locking pin 8 is securely locked into the electro-mechanical lock 9, the bottom beam 6 is secured in a lower position and the roll door 1 is secured in the locked state, wherein the opening 4 is closed and the area inside the robot cell/machine cell is not accessible for the user.

The electro-mechanical lock 9 is further arranged to send a status signal to a control system to inform the control system whether the roll door 1 is closed, upon which signal the machine/robot may be started. Further, the electro-mechanical lock 9 is arranged to receive a signal from the control system that the machine/robot is started, wherein the electro-mechanical lock 9 is arranged to lock the locking pin 8 into the electro-mechanical lock 9. It may also be possible that the electro-mechanical lock 9 is arranged to inform the control system whether the locking pin 8 is locked in the electro-mechanical lock 9 or not. The electro-mechanical lock 9 may also be arranged to receive a status signal from a control system if it is safe to unlock/release the locking pin 8 from its locked position in the electro-mechanical lock 9 or not. When the roll door closes, the locking pin 8 slides into the receiving opening 9a of the electro-mechanical lock 9 and the electro-mechanical lock 9 gives a signal to the control system that the roll door 1 is closed, wherein also the locking pin 8 is in its end position. When a start signal to the machine/robot is given, the electro-mechanical lock 9 locks the locking pin 8 electro-mechanically into the lock 9, wherein it is impossible to open the roll door 1. The locking pin 8 at respective side of the roll door 1 is kept in the locked state until the machine/robot is shut off and the motion inside the cell has ceased, which may be detected by one or several motion sensors and/or a time lap function. After all moving parts have ceased their motions, the electro-mechanical lock 9 releases the locking pin 8 and the roll door 1 may be opened safely. A double safety is thereby achieved with both an electronic and a mechanical locking function. As mentioned above, it may be preferred to also secure the long sides 5c of the door leaf 5 into the frame profiles 3 to prevent that the long sides 5c of the door leaf 5 from being pushed out from the guiding grooves 3a of the frame profiles 3.

Fig. 4 shows the part of the roll door 1 and frame profile 3 of Fig. 3c, wherein the frame profile 3 is "closed" by the cover part 3e, which safely covers the moveable parts, i.e. the lock arrangement and attachment parts between a door panel 1 and the frame profile 3, inside the frame profile 3. This is achieved by that the cover part 3e is connectable to the base part 3d, and in the connected state the frame profile 3 covers the locking pin 8 and the electro-mechanical lock 9 and other moving parts inside the frame profile 3. Thus, a user is protected from contact with the locking pin 8 and the electro-mechanical lock 9 and moving parts which are protected inside the frame profile 3 when the beam 6 and the flexible door leaf 5 moves along the guiding grooves 3a of the frame profiles 3. As may be seen from Fig. 4, the guiding groove 3a is an elongate opening between the base part 3d and the cover part 3e of the frame profile 3, and the second side 3b which faces the door leaf 5, thereby comprises both a part of the base part 3d and a part of the cover part 3e. The cover part 3e comprises a window 3f, which provides a possibility to a visible check of the status of the lock arrangement, i.e. that the locking pin 8 is secured into the end position of the electro-mechanical lock 9. An extra, visual safety is thereby achieved.

Fig. 5 is a section view of the frame profile 3 with the lock arrangement 8, 9 arranged enclosed inside the frame profile 3 and an outer end of the roll door 1 attached to the frame profile 3. The base part 3d encloses/covers the longitudinally moving parts of the roll door 1, including the long side 5c of the door leaf 5 and outer end 6a of the beam 6, on the upper side and the right side (second side 3c), relating to the orientation of the figure. The base part 3d may be attached to a substrate like a wall, a pillar or the like, either with "the upper side" relating to the figure or the right-hand side (second side 3c), whichever most convenient. The cover part 3e encloses/covers the same parts on the lower side and the left side (first side 3b). The cover part 3e may be screwed to the base part 3d or in other ways be fixedly attached to the base part 3d, and by fixing the cover part 3e to the base part 3d, a safe enclosure is achieved around the moving parts. The L-shaped bracket 10 is as mentioned above, fixedly attached to the outer end 6a of the beam 6, and the locking pin 8 is attached on the underside of the bracket (the pin 8 is not visible in the figure). The electro-mechanical lock 9 is aligned with the locking pin 8 and the bracket 10.

## Claims

1. A system comprising a control system and a roll door (1) for preventing unauthorized entry into a machine cell, the roll door (1) comprising:
- a roll operator (2),
- two frame profiles (3) to be arranged on opposite sides of an opening (4), each frame profile (3) comprises guide grooves (3a) along their mutually facing sides (3b), wherein the roll operator (2) is arranged to be attached to a respective end (3g) of each frame profile (3), wherein the roll operator (2) extends between the ends (3g) of the frame profiles (3),
- a flexible door leaf (5), comprising a first end (5a), an opposite second end (5b) and two long sides (5c), wherein the first end (5a) of the flexible door leaf (5) is secured to the roll operator (2), and the roll operator (2) is arranged to roll up the flexible door leaf (5) on the roll operator (2),
- a beam (6), secured to the second end (5b) of the flexible door leaf (5), wherein outer ends (6a) of the beam (6) and the long sides (5c) of the flexible door leaf (5) being accommodated in the guiding grooves (3a) of the frame profiles (3), and the door leaf (5) as well as the beam (6) is movable along the frame profiles (3) in their longitudinal direction,
- a locking pin (8), and
- an electro-mechanical lock (9) arranged to receive the locking pin (8) and further arranged to lock the locking pin (8) in an end position, wherein one of the locking pin (8) and the electro-mechanical lock (9) is arranged to the frame profile (3) and the other is arranged to the outer end (6a) of the beam (6), wherein the electro-mechanical lock (9) further is arranged to receive a status signal from the control system with information if a machine, which is connectable to the control system, when connected to the control system, is started, wherein, if the machine is started, the electro-mechanical lock (9) is arranged to lock the locking pin (8) in the end position, wherein
the electro-mechanical lock (9) further is arranged to send a status signal to the control system with information that the roll door (1) is closed, wherein the machine, when connected to the control system, may be started, and wherein
the electro-mechanical lock (9) further is arranged to unlock the locking pin (8) from its locked position in the electro-mechanical lock (9) upon a status signal from the control system with information that no motions are detected in and around the machine connected to the control system, and/or that the electro-mechanical lock (9) is arranged to, after a predetermined period of time, unlock the locking pin (8) from its locked position in the electro-mechanical lock (9) upon a status signal from the control system with information that the machine connected to the control system is stopped, and wherein
the frame profile (3) is arranged such as both the locking pin (8) and the electro-mechanical lock (9) are enclosed inside the frame profile (3) to prevent a user from contact with the locking pin (8) and the electro-mechanical lock (9).

2. System according to claim 1, wherein the beam (6) comprises a bracket (10) mounted at the outer end (6a) of the beam (6), wherein the locking pin (8) is arranged on the bracket (10) and protrudes from the bracket (10) in the longitudinal direction of the frame (3), and the electro-mechanical lock (9) is fixedly arranged to the frame profile (3).

3. System according to claim 2, wherein the electro-mechanical lock (9) comprises a receiving opening (9a) which is directed towards the locking pin (8), and which receiving opening (9a) is arranged to receive the locking pin (8) and accommodate the locking pin (8) in the end position.

4. System according to any of the preceding claims, wherein the locking pin (8) is flexibly arranged, either on the frame profile (3) if arranged on the frame profile (3) or on the outer end (6a) of the beam (6) if arranged on the outer end (6a) of the beam (6).

5. System according to any of the preceding claims, wherein the frame profile (3) comprises a base part (3d) and a cover part (3e), wherein the cover part (3e) is connectable to the base part (3d) and in the connected state arranged to cover the locking pin (8) and the electro-mechanical lock (9).

6. System according to claim 5, wherein at least the cover part (3e) comprises a window (3f) in position of the electro-mechanical lock (9) such as the locking pin (8) and the electro-mechanical lock (9) is visible in the window (3f) in the end position.

7. System according to any of the preceding claims, wherein each outer end (6a) of the beam (6) comprises at least one locking pin (8) and each frame profile (3) comprises at least one electro-mechanical lock (9), wherein a locking function is achieved at both sides of the roll door (1).

## Patentansprüche

1. System, umfassend ein Steuersystem und ein Rolltor (1) zum Verhindern eines unbefugten Betretens einer Maschinenzelle, wobei das Rolltor
(1) umfasst:
- einen Rollantrieb (2),
- zwei Rahmenprofile (3) zur Anordnung auf gegenüberliegenden Seiten einer Öffnung (4), wobei die Rahmenprofile (3) entlang ihrer einander zugewandten Seiten (3b) jeweils Führungsnuten (3a) aufweisen, wobei der Rollantrieb (2) zur Befestigung an einem jeweiligen Ende (3g) jedes Rahmenprofils (3) eingerichtet ist, wobei sich der Rollantrieb (2) zwischen den Enden (3g) der Rahmenprofile (3) erstreckt,
- ein flexibles Türblatt (5), das ein erstes Ende (5a), ein gegenüberliegendes zweites Ende (5b) und zwei Längsseiten (5c) umfasst, wobei das erste Ende (5a) des flexiblen Türblatts (5) am Rollantrieb (2) gesichert ist und der Rollantrieb (2) so eingerichtet ist, dass er das flexible Türblatt (5) auf dem Rollantrieb (2) aufrollt,
- einen am zweiten Ende (5b) des flexiblen Türblatts (5) gesicherten Balken (6), wobei äußere Enden (6a) des Balkens (6) und die Längsseiten (5c) des flexiblen Türblatts (5) in den Führungsnuten (3a) der Rahmenprofile (3) aufgenommen sind und das Türblatt (5) sowie der Balken (6) entlang der Rahmenprofile (3) in deren Längsrichtung bewegbar sind,
- einen Verriegelungsstift (8) und
- ein elektromechanisches Schloss (9), das zur Aufnahme des Verriegelungsstifts (8) und ferner zur Verriegelung des Verriegelungsstifts (8) in einer Endposition eingerichtet ist, wobei entweder der Verriegelungsstift (8) oder das elektromechanische Schloss (9) am Rahmenprofil (3) und das andere am äußeren Ende (6a) des Balkens (6) angeordnet ist, wobei das elektromechanische Schloss (9) ferner so eingerichtet ist, dass es ein Statussignal vom Steuersystem mit Informationen empfängt, ob eine Maschine, die mit dem Steuersystem verbindbar ist, bei Verbindung mit dem Steuersystem gestartet wird, wobei, wenn die Maschine gestartet wird, das elektromechanische Schloss (9) so eingerichtet ist, dass es den Verriegelungsstift (8) in der Endposition verriegelt, wobei das elektromechanische Schloss (9) ferner so eingerichtet ist, dass es ein Statussignal an das Steuersystem mit Informationen sendet, dass das Rolltor (1) geschlossen ist, wobei die Maschine bei Verbindung mit dem Steuersystem gestartet werden kann, und wobei das elektromechanische Schloss (9) ferner so eingerichtet ist, dass es den Verriegelungsstift (8) aus seiner verriegelten Position in dem elektromechanischen Schloss (9) entriegelt, wenn ein Statussignal vom Steuersystem mit Informationen vorliegt, dass keine Bewegungen in und um die mit dem Steuersystem verbundene Maschine erkannt werden, und/oder das elektromechanische Schloss (9) so eingerichtet ist, dass es nach einer vorbestimmten Zeitspanne den Verriegelungsstift (8) aus seiner verriegelten Position in dem elektromechanischen Schloss (9) entriegelt, wenn ein Statussignal vom Steuersystem mit Informationen vorliegt, dass die mit dem Steuersystem verbundene Maschine angehalten ist, und wobei das Rahmenprofil (3) so eingerichtet ist, dass sowohl der Verriegelungsstift (8) als auch das elektromechanische Schloss (9) innerhalb des Rahmenprofils (3) eingeschlossen sind, um zu verhindern, dass ein Benutzer mit dem Verriegelungsstift (8) und dem elektromechanischen Schloss (9) in Kontakt kommt.

2. System nach Anspruch 1, wobei der Balken (6) einen am äußeren Ende (6a) des Balkens (6) montierten Bügel (10) umfasst, wobei der Verriegelungsstift (8) am Bügel (10) angeordnet ist und in Längsrichtung des Rahmens (3) vom Bügel (10) absteht, und das elektromechanische Schloss (9) fest am Rahmenprofil (3) angeordnet ist.

3. System nach Anspruch 2, wobei das elektromechanische Schloss (9) eine Aufnahmeöffnung (9a) umfasst, die zum Verriegelungsstift (8) hin ausgerichtet ist, wobei die Aufnahmeöffnung (9a) so eingerichtet ist, dass sie den Verriegelungsstift (8) aufnimmt und den Verriegelungsstift (8) in der Endposition enthält.

4. System nach einem der vorhergehenden Ansprüche, wobei der Verriegelungsstift (8) flexibel entweder am Rahmenprofil (3), bei Anordnung am Rahmenprofil (3), oder am äußeren Ende (6a) des Balkens (6), bei Anordnung am äußeren Ende (6a) des Balkens (6), angeordnet ist.

5. System nach einem der vorhergehenden Ansprüche, wobei das Rahmenprofil (3) ein Basisteil (3d) und ein Abdeckteil (3e) umfasst, wobei das Abdeckteil (3e) mit dem Basisteil (3d) verbindbar ist und im verbundenen Zustand so angeordnet ist, dass es den Verriegelungsstift (8) und das elektromechanische Schloss (9) abdeckt.

6. System nach Anspruch 5, wobei zumindest das Abdeckteil (3e) ein Fenster (3f) an der Position des elektromechanischen Schlosses (9) derart umfasst, dass der Verriegelungsstift (8) und das elektromechanische Schloss (9) in der Endposition im Fenster (3f) sichtbar sind.

7. System nach einem der vorhergehenden Ansprüche, wobei jedes äußere Ende (6a) des Balkens (6) mindestens einen Verriegelungsstift (8) umfasst und jedes Rahmenprofil (3) mindestens ein elektromechanisches Schloss (9) umfasst, wobei eine Verriegelungsfunktion an beiden Seiten des Rolltors (1) erreicht wird.

## Revendications

1. Système comprenant un système de commande et une porte à enroulement (1) pour empêcher une entrée non autorisée dans une cellule de machine, la porte à enroulement
(1) comprenant :
- un opérateur d'enroulement (2),
- deux profilés de cadre (3) destinés à être agencés sur des côtés opposés d'une ouverture (4), chaque profilé de cadre (3) comprend des rainures de guidage (3a) le long de leurs côtés (3b) se faisant mutuellement face, dans lequel l'opérateur d'enroulement (2) est agencé pour être attaché à une extrémité (3g) respective de chaque profilé de cadre (3), dans lequel l'opérateur d'enroulement (2) s'étend entre les extrémités (3g) des profilés de cadre (3),
- un vantail de porte souple (5), comprenant une première extrémité (5a), une deuxième extrémité (5b) opposée et deux côtés (5c) longs, dans lequel la première extrémité (5a) du vantail de porte souple (5) est assujettie à l'opérateur d'enroulement (2), et l'opérateur d'enroulement (2) est agencé pour enrouler le vantail de porte souple (5) sur l'opérateur d'enroulement (2),
- une poutre (6), assujettie à la deuxième extrémité (5b) du vantail de porte souple (5), dans lequel des extrémités externes (6a) de la poutre (6) et les côtés (5c) longs du vantail de porte souple (5) étant logés dans les rainures de guidage (3a) des profilés de cadre (3), et le vantail de porte (5) ainsi que la poutre (6) sont mobiles le long des profilés de cadre (3) dans leur direction longitudinale,
- une broche de verrouillage (8), et
- un verrou électromécanique (9) agencé pour recevoir la broche de verrouillage (8) et agencé en outre pour verrouiller la broche de verrouillage (8) dans une position d'extrémité, dans lequel un élément parmi la broche de verrouillage (8) et le verrou électromécanique (9) est agencé sur le profilé de cadre (3) et l'autre élément est agencé sur l'extrémité externe (6a) de la poutre (6), dans lequel le verrou électromécanique (9) est en outre agencé pour recevoir un signal de statut provenant du système de commande avec des informations si une machine, qui peut être connectée au système de commande, lorsque connectée au système de commande, est démarrée, dans lequel si la machine est démarrée, le verrou électromécanique (9) est agencé pour verrouiller la broche de verrouillage (8) dans la position d'extrémité, dans lequel le verrou électromécanique (9) est en outre agencé pour envoyer un signal de statut au système de commande avec des informations que la porte à enroulement (1) est fermée, dans lequel la machine, lorsque connectée au système de commande, peut être démarrée, et dans lequel le verrou électromécanique (9) est en outre agencé pour déverrouiller la broche de verrouillage (8) de sa position verrouillée dans le verrou électromécanique (9) à un signal de statut provenant du système de commande avec des informations qu'aucun mouvement n'est détecté dans ni autour de la machine connectée au système de commande, et/ou que le verrou électromécanique (9) est agencé pour, après une période de temps prédéterminée, déverrouiller la broche de verrouillage (8) de sa position verrouillée dans le verrou électromécanique (9) à un signal de statut provenant du système de commande avec des informations que la machine connectée au système de commande est arrêtée, et dans lequel le profilé de cadre (3) est agencé de telle sorte que la broche de verrouillage (8) et le verrou électromécanique (9) sont enfermés à l'intérieur du profilé de cadre (3) pour empêcher un utilisateur d'entrer en contact avec la broche de verrouillage (8) et le verrou électromécanique (9).

2. Système selon la revendication 1, dans lequel la poutre (6) comprend un support (10) monté au niveau de l'extrémité externe (6a) de la poutre (6), dans lequel la broche de verrouillage (8) est agencé sur le support (10) et fait saillie à partir du support (10) dans la direction longitudinale du cadre (3), et le verrou électromécanique (9) est agencé de manière fixe sur le profilé de cadre (3).

3. Système selon la revendication 2, dans lequel le verrou électromécanique (9) comprend une ouverture de réception (9a) qui est dirigée vers la broche de verrouillage (8), et laquelle ouverture de réception (9a) est agencée pour recevoir la broche de verrouillage (8) et loger la broche de verrouillage (8) dans la position d'extrémité.

4. Système selon l'une quelconque des revendications précédentes, dans lequel la broche de verrouillage (8) est agencée de manière souple, soit sur le profilé de cadre (3) si agencée sur le profilé de cadre (3), soit sur l'extrémité externe (6a) de la poutre (6) si agencée sur l'extrémité externe (6a) de la poutre (6).

5. Système selon l'une quelconque des revendications précédentes, dans lequel le profilé de cadre (3) comprend une partie base (3d) et une partie couvercle (3e), dans lequel la partie couvercle (3e) peut être connectée à la partie base (3d) et dans l'état connecté agencée pour couvrir la broche de verrouillage (8) et le verrou électromécanique (9).

6. Système selon la revendication 5, dans lequel au moins la partie couvercle (3e) comprend une fenêtre (3f) en position du verrou électromécanique (9) de telle sorte que la broche de verrouillage (8) et le verrou électromécanique (9) sont visibles dans la fenêtre (3f) dans la position d'extrémité.

7. Système selon l'une quelconque des revendications précédentes, dans lequel chaque extrémité externe (6a) de la poutre (6) comprend au moins une broche de verrouillage (8) et chaque profilé de cadre (3) comprend au moins un verrou électromécanique (9), dans lequel une fonction de verrouillage est obtenue au niveau des deux côtés de la porte à enroulement (1).
